# EUROPEAN PATENT APPLICATION

(11) **EP 4 737 872 A1**
(43) Date of publication of application: **06.05.2026**
(21) Application number: 25210540.8
(22) Date of filing: 22.10.2025
(51) Int. Cl.: G01K 1/02, G01K 1/143, G01K 3/00, G01K 7/24

(54) **SYSTEMS AND METHODS FOR IDENTIFYING A LOCATION OF A THERMAL EVENT DETECTED BY A TEMPERATURE SENSING TAPE**

(30) Priority: 30.10.2024 US 202463713851 P
(71) Applicant: Littelfuse, Inc., Rosemont, Illinois 60018 (US)
(72) Inventor: Martis, Claran, Rosemont, 60018 (US); Pineda, Martin, Rosemont, 60018 (US); Golubovic, Boris, Rosemont, 60018 (US); Zaltauskas, Arnoldas, Rosemont, 60018 (US); Doms, Marco, Rosemont, 60018 (US); Misevicius, Rimantas, Rosemont, 60018 (US)
(74) Representative: Arnold & Siedsma

(57) **Abstract**

Systems and methods for identifying a location of a thermal event detected by a temperature sensing tape are provided. The temperature sensing tape can include a resistive ladder with parallel resistors between a plurality of temperature sensing elements to create voltage dividers, and unique analog output voltages can correspond to different ones of the plurality of temperature sensing elements being activated. Pulses injected into and reflected by the temperature sensing tape can be used detect a distance to a location where a triggering event is detected.

## Description

The present application claims the benefit of priority to U.S. Provisional Application Serial No. 63/713,851, entitled "SYSTEMS AND METHODS FOR IDENTIFYING A LOCATION OF A THERMAL EVENT DETECTED BY A TEMPERATURE SENSING TAPE" and filed October 30, 2024.

### FIELD

The present disclosure generally relates to temperature sensing devices. More particularly, the present disclosure relates to systems and methods for identifying a location of a thermal event detected by a temperature sensing tape.

### BACKGROUND

Electrical systems and devices, such as batteries and semiconductors, for example, can be damaged by high temperature conditions if such conditions are allowed to persist. Therefore, it is common for electrical systems and devices to be equipped with temperature sensing devices that can be used to measure temperature variations at discrete locations in or on the electrical systems or devices. For example, if a measured temperature exceeds a predetermined threshold, an associated electrical system or device being protected may automatically shut off until such a condition subsides or is remedied, thereby preventing or mitigating any damage to the associated electrical system or device.

Some known temperature sensing devices include a temperature sensing tape that includes temperature sensing elements at discrete locations thereon or therein. These devices output a digital signal (e.g., high or low) to identify a thermal event, but do not identify a location of the thermal event. Accordingly, if the temperature sensing tape is affixed to an electrical system, such as a battery pack, an output signal will only identify that the battery pack is experiencing a thermal event, but will not identify which cell in the battery pack is experiencing the thermal event.

It is with respect to these and other considerations that the present disclosure may be useful.

### BRIEF SUMMARY

This Brief Summary is provided to introduce a selection of concepts in a simplified form that are further described below in the Detailed Description. This Brief Summary is not intended to identify key features or essential features of claimed subject matter or intended as an aid in determining scope of the claimed subject matter.

A temperature sensing tape may include an insulating support structure, a plurality of temperature sensing elements electrically connected in series and disposed on the insulating support structure, and a respective resistor connected in parallel between each of the plurality of temperature sensing elements and disposed on the insulating support structure. A triggering event detected by one of the plurality of temperature sensing elements can cause a change in impedance of the one of the plurality of temperature sensing elements and an open circuit in the plurality of temperature sensing elements downstream of the one of the plurality of temperature sensing elements.

The temperature sensing tape can include a conductive circuit that can include the plurality of temperature sensing elements, the respective resistor connected in parallel between each of the plurality of temperature sensing elements, and a flexible conductor disposed on the insulating support structure therebetween. An output voltage of the conductive circuit can indicate which of the plurality of temperature sensing elements detected the triggering event.

The temperature sensing tape can include a pull up resistor at one end of the conductive circuit, and the output voltage can be measured at the pull up resistor.

The temperature sensing tape can include an amplifier circuit electrically connected to the conductive circuit.

The temperature sensing tape can include a conductive circuit that can include the plurality of temperature sensing elements, the respective resistor connected in parallel between each of the plurality of temperature sensing elements, and a flexible conductor disposed on the insulating support structure therebetween. A first output voltage at a first end of the conductive circuit can identify a first of the plurality of temperature sensing elements detecting the triggering event, and a second output voltage at a second end of the conductive circuit can identify a second of the plurality of temperature sensing elements detecting the triggering event.

The plurality of temperature sensing elements can include a polymeric positive temperature coefficient (PPTC) sensor or a printed temperature indicator (PTI) sensor, and the respective resistor connected in parallel between each of the plurality of temperature sensing elements can include a low-temperature coefficient material with high resistance.

A temperature sensing tape can include an insulating support structure, a plurality of temperature sensing elements electrically connected in series and disposed on the insulating support structure, and a flexible conductor disposed on the insulating support structure and arranged in series with the plurality of temperature sensing elements to form a conductive circuit. A triggering event detected by one of the plurality of temperature sensing elements can cause a change in impedance of the one of the plurality of temperature sensing elements and an incident pulse signal injected into the conductive circuit to be reflected by the one of the plurality of temperature sensing elements as a reflected pulse signal.

A time difference between the incident pulse signal and the reflected pulse signal can indicate which of the plurality of temperature sensing elements detected the triggering event.

The conductive circuit can have a uniform impedance absent the triggering event.

The flexible conductor disposed between two of the plurality of temperature sensing elements can be wave-shaped to increase a length of the flexible conductor and an electrical distance that the incident pulse signal and the reflected pulse signal travel without increasing a physical distance between the two of the plurality of temperature sensing elements.

Increasing inductance and capacitance of the temperature sensing tape can slow down the incident pulse signal and the reflected pulse signal.

A method can include detecting a triggering event by one of a plurality of temperature sensing elements of a conductive circuit electrically connected in series with a flexible conductor and disposed on an insulating support structure of a temperature sensing tape, changing an impedance of the one of the plurality of temperature sensing elements responsive to detecting the triggering event to create an open circuit in the plurality of temperature sensing elements downstream of the one of the plurality of temperature sensing elements, and outputting an output signal from the conductive circuit. The output signal can be indicative of which of the plurality of temperature sensing elements detected the triggering event.

A respective resistor can be connected in parallel between each of the plurality of temperature sensing elements, and the output signal can include an output voltage.

The method can include measuring the output voltage at a pull up resistor located at one end of the conductive circuit and identifying which of the plurality of temperature sensing elements corresponds with the output voltage in a lookup table for the temperature sensing tape.

The method can include amplifying the output voltage with an amplifier circuit electrically connected to the conductive circuit.

The method can include measuring the output voltage at a first end of the conductive circuit to identify a first of the plurality of temperature sensing elements detecting the triggering event and measuring the output voltage at a second end of the conductive circuit to identify a second of the plurality of temperature sensing elements detecting the triggering event.

The output signal can include a reflected pulse signal that can be a reflection of an incident pulse signal injected into the conductive circuit and reflected by the one of the plurality of temperature sensing elements.

The method can include measuring a time difference between the incident pulse signal and the reflected pulse signal and identifying which of the plurality of temperature sensing elements corresponds with the time difference for the temperature sensing tape.

The method can include matching an impedance of the flexible conductor with the impedance of the plurality of temperature sensing elements absent the triggering event to create a uniform impedance in the conductive circuit.

The flexible conductor disposed between two of the plurality of temperature sensing elements can be wave-shaped to increase a length of the flexible conductor and an electrical distance that the incident pulse signal and the reflected pulse signal travel without increasing a physical distance between the two of the plurality of temperature sensing elements.

Other technical features may be readily apparent to one skilled in the art from the following figures, descriptions, and claims.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 is a block diagram illustrating a thermal protection system in accordance with the present disclosure.
FIG. 2 is a top view illustrating a temperature sensing tape in accordance with the present disclosure.
FIG. 3 is a circuit diagram illustrating a conductive circuit of a temperature sensing tape in accordance with the present disclosure.
FIG. 4A is a graph illustrating output voltage vs. activated temperature sensing element in a temperature sensing tape with 0% tolerance resistors in accordance with the present disclosure.
FIG. 4B is a graph illustrating output voltage vs. activated temperature sensing element in a temperature sensing tape with 1% tolerance resistors in accordance with the present disclosure.
FIG. 4C is a graph illustrating output voltage vs. activated temperature sensing element in a temperature sensing tape with 5% tolerance resistors in accordance with the present disclosure.
FIG. 5A is a circuit diagram illustrating a conductive circuit of a temperature sensing tape during a first scan in a dual scan in accordance with the present disclosure.
FIG. 5B a circuit diagram illustrating a conductive circuit of a temperature sensing tape during a second scan in a dual scan in accordance with the present disclosure.
FIG. 6 is a graph illustrating output voltage vs. activated temperature sensing element in a dual scan of a temperature sensing tape in accordance with the present disclosure.
FIG. 7 is a block diagram illustrating a thermal protection system in accordance with the present disclosure.
FIG. 8 is a graph illustrating an incident pulse signal and reflected pulse signals from activated temperature sensing elements in a temperature sensing tape in accordance with the present disclosure.
FIG. 9 is a diagram illustrating a temperature sensing tape in accordance with the present disclosure.

### DETAILED DESCRIPTION

Examples of the system and method for identifying a location of a thermal event detected by a temperature sensing tape in accordance with the present disclosure will now be described more fully hereinafter with reference made to the accompanying drawings.

As used herein, a temperature sensing tape or similar term can refer to a structure having one or an array of temperature sensing elements that can be arranged in electrical series with a conductor such that the conductor can be integrated in a flexible tape material, a cloth material, or a woven structure or can be a freestanding conductor, such as wire. The temperature sensing tape can be used for distributed temperature sensing, such as by affixing the temperature sensing tape to a protected element where a temperature is to be measured. For example, the temperature sensing tape can be affixed to the protected element at least in locations at which any of the temperature sensing elements are present in order to impart thermal contact between the temperature sensing elements and the protected element.

Examples disclosed herein include systems and methods for identifying a location of a thermal event detected by a temperature sensing tape. For example, a temperature sensing tape can include a plurality of temperature sensing elements of a conductive circuit electrically connected in series with a flexible conductor and disposed on an insulating support structure of the temperature sensing tape. One of the plurality of temperature sensing elements can detect a triggering event, such as the thermal event and, responsive thereto, an impedance thereof can change, thereby creating an open circuit in the plurality of temperature sensing elements downstream of the one of the plurality of temperature sensing elements. Such change in impedance can include an increase from low to high or a decrease from high to low. In particular, such change in impedance in the one of the plurality of temperature sensing elements detecting the triggering event can isolate the plurality of temperature sensing elements downstream of the one of the plurality of temperature sensing elements. Then, the conductive circuit can output a signal, which can be indicative of which of the plurality of temperature sensing elements detected the triggering event.

The temperature sensing tape can include a resistive ladder with parallel resistors between the plurality of temperature sensing elements to create voltage dividers. The pulses injected into and reflected by the temperature sensing tape and the principles of Time Domain Reflectometry (TDR) can be used detect a distance to a location where the triggering event is detected.

First, details of the resistive ladder will be discussed. A respective resistor can be connected in parallel between each of the plurality of temperature sensing elements. The signal output by the conductive circuit can include an output voltage. That is, the signal output by the conductive circuit can be an analog signal such that different analog signals can correspond to different ones of the plurality of temperature sensing elements being activated by detection of the triggering event.

The output voltage can be measured at a pull up resistor located at one end of the conductive circuit, and which of the plurality of temperature sensing elements corresponds with the output voltage can be identified in a lookup table for the temperature sensing tape to identify which of the plurality of temperature sensing elements detected the triggering event. Additionally or alternatively, the output voltage can be amplified with an amplifier circuit electrically connected to the conductive circuit.

A dual scan can be conducted to identify more than one of the plurality of temperature sensing elements detecting the triggering event and thus, boundaries of a region of heating. For example, the output voltage at a first end of the conductive circuit can be measured to identify a first of the plurality of temperature sensing elements detecting the triggering event, and the output voltage at a second end of the conductive circuit can be measured to identify a second of the plurality of temperature sensing elements detecting the triggering event.

Details of the pulses injected into and reflected by the temperature sensing tape and TDR will also be discussed. The signal output by the conductive circuit can include a reflected pulse signal that is a reflection of an incident pulse signal injected into the conductive circuit and reflected by the one of the plurality of temperature sensing elements detecting the triggering event. A time difference between the incident pulse signal and the reflected pulse signal can be measured, and the time difference can indicate which of the plurality of temperature sensing elements detected the triggering event. In this regard, different time differences can correspond to different ones of the plurality of temperature sensing elements being activated by detection of the triggering event. For example, the time difference can be identified in a lookup table for the temperature sensing tape to identify which of the plurality of temperature sensing elements detected the triggering event. Additionally or alternatively, a distance to the one of the plurality of temperature sensing elements detecting the triggering event can be identified by multiplying a velocity of propagation of the incident pulse signal and the time difference and dividing that product by 2.

The conductive circuit can have a uniform impedance to facilitate the reflected pulse signal being reflected by the one of the plurality of temperature sensing tapes detecting the triggering event. In particular, when there is no triggering event (i.e., absent the triggering event), an impedance of the flexible conductor can be matched with the impedance of the one of the plurality of temperature sensing elements to create the uniform impedance in the conductive circuit. To achieve such matching, the flexible conductor disposed between two of the plurality of temperature sensing elements can be wave-shaped to increase a length of the flexible conductor and an electrical distance that the incident pulse signal and the reflected pulse signal travel without increasing a physical distance between the two of the plurality of the plurality of temperature sensing elements.

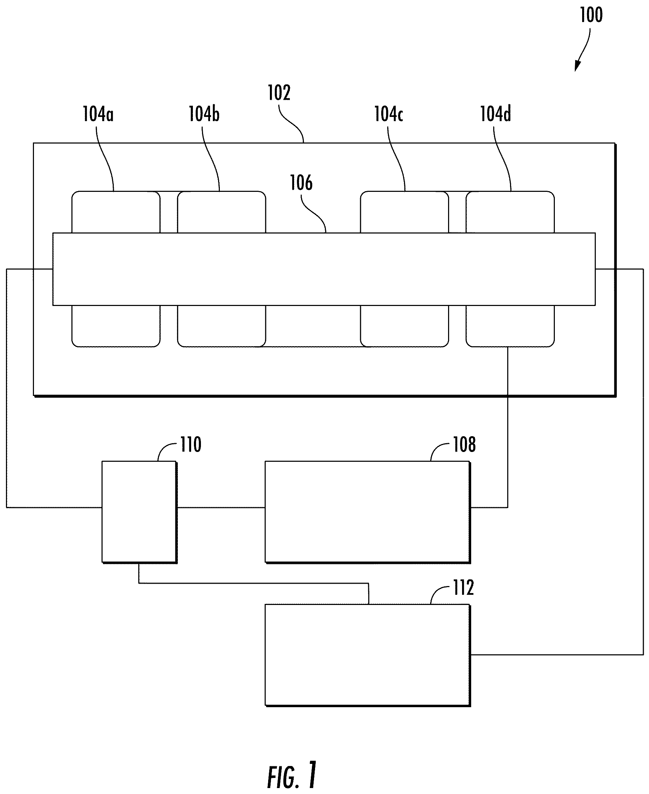

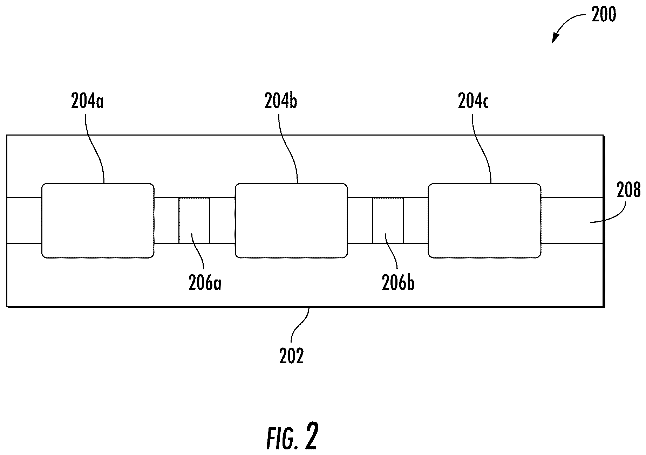

FIG. 1 is a block diagram illustrating a thermal protection system 100 in accordance with the present disclosure. As seen, the thermal protection system 100 can include a protected element 102 that can be connected to a load 108 for supplying electrical power thereto. As illustrated in FIG. 2, the protected element 102 can include or be a battery, which can include a plurality of cells 104a, 104b, 104c, 104d that can be electrically connected in series. For example, the protected element 102 can include or be a lithium-ion battery, a lithium polymer battery, a Ni-MH rechargeable battery, and the like. However, that disclosed herein is not so limited and can include any protected element as would be understood by one of ordinary skill in the art, including any electrical power source or electrical device that would benefit from protection against high temperatures. For example, the protected element 102 can include or be a printed circuit board, a transformer, a heatsink, a magnetic device, a grid filter, an electromagnetic interference filter, a power tool, a power tool with a battery pack, an electric vehicle, an e-scooter, a laptop computer, a notebook computer, a large battery system, and the like. As a further example, the protected element 102 can include or be a semiconductor or a semiconductor chip.

The thermal protection system 100 can also include a temperature sensing tape 106. It is to be understood that the temperature sensing tape 106 can be thermally coupled to the protected element 102, for example, by adhering the temperature sensing tape 106 to or embedding the temperature sensing tape 106 on the protected element 102, with any temperature sensing elements of the temperature sensing tape 106 being aligned with areas requiring temperature sensing. For example, the temperature sensing elements of the temperature sensing tape 106 can be disposed on, over, or above surfaces of the plurality of cells 104a, 104b, 104c, 104d of the protected element 102. In particular, each of the temperature sensing elements of the temperature sensing tape 106 can be positioned so as to be under a respective thermal influence of a respective one of the plurality of cells 104a, 104b, 104c, 104d such that an increase in a temperature of one of the plurality of cells 104a, 104b, 104c, 104d may cause an increase in a temperature of an associated one of the temperature sensing elements disposed thereon.

The thermal protection system 100 can also include a control element 112 that can be electrically connected to the temperature sensing tape 106, for example, to any flexible conductors or temperature sensing elements of the temperature sensing tape 106, and configured to monitor a resistance or an impedance of the temperature sensing tape 106. The control element 112 can be operatively connected to a disconnect switch 110 that can be connected in electrical series between the protected element 102 and the load 108. For example, the control element 112 can include a digital control element, such as an ASIC, a microprocessor, and the like, and the disconnect switch 110 can include a FET, a relay, and the like.

During normal operation of the thermal protection system 100, the protected element 102 can supply electrical power to the load 108, and the temperature in the plurality of cells 104a, 104b, 104c, 104d can be within a normal operating range, for example, less than 60°C, less than 80°C, and the like. However, upon an occurrence of a high temperature condition (i.e., a triggering event, a thermal event, etc.), the temperature of any of the plurality of cells 104a, 104b, 104c, 104d can increase above the normal operating range, which may cause the temperature of associated ones of the temperature sensing elements of the temperature sensing tape 106 to increase. The high temperature condition can be caused by exposure to an external heat source, for example, the protected element 102 sitting out in the sun, or from an overcurrent condition caused by an internal fault in the protected element 102, such as a short circuit.

FIG. 2 is a top view illustrating a temperature sensing tape 200 in accordance with the present disclosure. It is to be understood that the temperature sensing tape 200 can include the temperature sensing tape 106.

As seen, the temperature sensing tape 200 can include an insulating support structure 202, for example, a flexible substrate. The insulating support structure 202 can include a strip of a dielectric material that can include an adhesive material on one or both sides thereof for adhering the temperature sensing tape 200 to one or a plurality of surfaces of one or a plurality of protected elements, such as the protected element 102. For example, the insulating support structure 202 can include Scotch tape, polyvinyl chloride (PVC) tape, mylar, and the like. Additionally or alternatively, , the insulating support structure 202 can include a cloth or woven material. The insulating support structure 202 can be sufficiently flexible to be applied to any surface or surfaces as would be desired by one of ordinary skill in the art, including multiple surfaces extending at angles to one another, curved surfaces, and the like. The adhesive material can be applied to a bottom side of the insulating support structure 202.

The temperature sensing tape 200 can also include a plurality of temperature sensing elements 204a, 204b, 204c electrically connected in series, disposed on the insulating support structure 202, and spaced apart from one another along a length of the insulating support structure 202. The temperature sensing elements 204a, 204b, 204c can include polymeric positive temperature coefficient (PPTC) sensors or devices and/or printed temperature indicator (PTI) sensors or devices.

Although the temperature sensing tape 200 is shown as including three temperature sensing elements 204a, 204b, 204c in FIG. 2, it is to be understood that the disclosure is not so limited. Instead, the temperature sensing tape 200 can include more or less than three temperature sensing elements 204a, 204b, 204c and any number as would be desired by one of ordinary skill in the art. For example, the number of the temperature sensing elements 204a, 204b, 204c can be dictated by a length of the temperature sensing tape 200, and, the number of the temperature sensing elements 204a, 204b, 204c can be dictated by distances between the temperature sensing elements 204a, 204b, 204c. In this regard, although the temperature sensing elements 204a, 204b, 204c are shown as being evenly spaced from one another in FIG. 2, it is to be understood that the disclosure herein is not so limited. Instead, the temperature sensing elements 204a, 204b, 204c can be disposed at regular or irregular intervals along the length of the insulating support structure 202 as may be dictated or required by a particular application of the temperature sensing tape 200.

As explained above, the adhesive material can be applied to, for example, a bottom side of the insulating support structure 202. The adhesive material can be applied to the bottom side of the insulating support structure 202 only in portions or locations of the insulating support structure 202 that correspond to the temperature sensing elements 204a, 204b, 204c on a top side thereof. That is, the adhesive material can be applied under the temperature sensing elements 204a, 204b, 204c on opposing sides of the insulating support structure 202, thereby improving thermal contact with the surfaces adhered thereto. Additionally or alternatively, the adhesive can include one or more additives that have high thermal conductivity, such as high thermal conductivity powder, to further improve the thermal contact with the surfaces adhered thereto. For example, additives that have high thermal conductivity can include intrinsic (low electrical conductivity) ZnO, Al₂O₃, or AlN diamond paste and high thermal conductivity electrically conductive particles, including ceramic, metal, or carbon-based particles, fibers, and the like.

In accordance with the resistive ladder and as seen in FIG. 2, a respective resistor 206a, 206b can be connected in parallel between each of the plurality temperature sensing elements 204a, 204b, 204c and disposed on the insulating support structure 202. The respective resistor 206a, 206b connected in parallel between each of the plurality of temperature sensing elements 204a, 204b, 204c can include a low-temperature coefficient material with high resistance, for example, a printed Metal Oxide Varistor (MOV) material. In operation, when a triggering event is detected by one of the plurality of temperature sensing elements 204a, 204b, 204c, an impedance of that one of the plurality of temperature sensing elements 204a, 204b, 204c can change, thereby causing an open circuit in the plurality of temperature sensing elements 204a, 204b, 204c downstream of the one of the plurality of temperature sensing elements 204a that detected the triggering event.

As also seen in FIG. 2, the temperature sensing tape 200 can include a flexible conductor 208 disposed on or in the insulating support structure 202 and electrically connected to the plurality of temperature sensing elements 204a, 204b, 204c and the respective resistor 206a, 206b connected in parallel between each of the plurality of temperature sensing elements 204a, 204b, 204c. As such, a conductive circuit of the temperature sensing tape 200 can include the plurality of temperature sensing elements 204a, 204b, 204c, the respective resistor 206a, 206b connected in parallel between each of the plurality temperature sensing elements 204a, 204b, 204c, and the flexible conductor 208, and an output voltage of the conductive circuit can indicate which of the plurality of temperature sensing elements 204a, 204b, 204c detected the triggering event.

The flexible conductor 208 can include elongated segments of flexible, electrically conductive material that can be adhered to, printed on, integrated with, or otherwise applied to the insulating support structure 202. For example, the flexible conductor 208 can include copper mesh, silver epoxy, conductive ink, metal wire or ribbon, and the like. As such, , the flexible conductor 208 can be shaped as a flat foil, a wire with a round cross-section, a single strand wire, a multistrand wire, a flat wire, a rod, and the like.

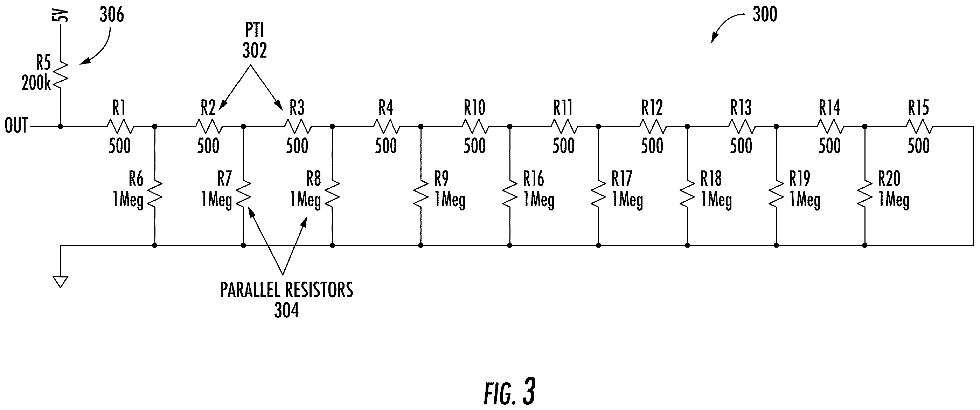

FIG. 3 is a circuit diagram illustrating a conductive circuit 300 of a temperature sensing tape in accordance with the present disclosure. It is to be understood that the conductive circuit 300 can represent the temperature sensing tape 200.

As seen in FIG. 3, the conductive circuit 300 can a plurality of temperature sensing elements 302 separated by parallel resistors 304. The conductive circuit 300 can also include a pull up resistor 306 at one end of the conductive circuit 300. The output voltage can be measured at the pull up resistor 306.

Although not specifically illustrated in FIG. 3, the conductive circuit 300 can also include an amplifier circuit electrically connected thereto.

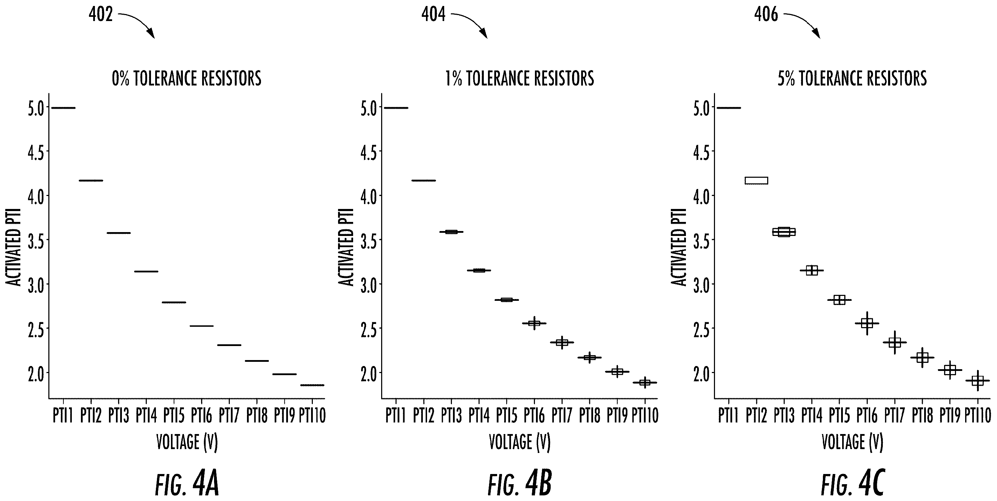

FIG. 4A, FIG. 4B, and FIG. 4C are graphs 402, 404, 406 illustrating output voltage vs. activated temperature sensing element in a temperature sensing tape with 0%, 1%, and 5% tolerance resistors in accordance with the present disclosure. As seen, different ones of the plurality of temperature sensing elements 204a, 204b, 204c detecting the triggering event can cause different levels of the output voltage.

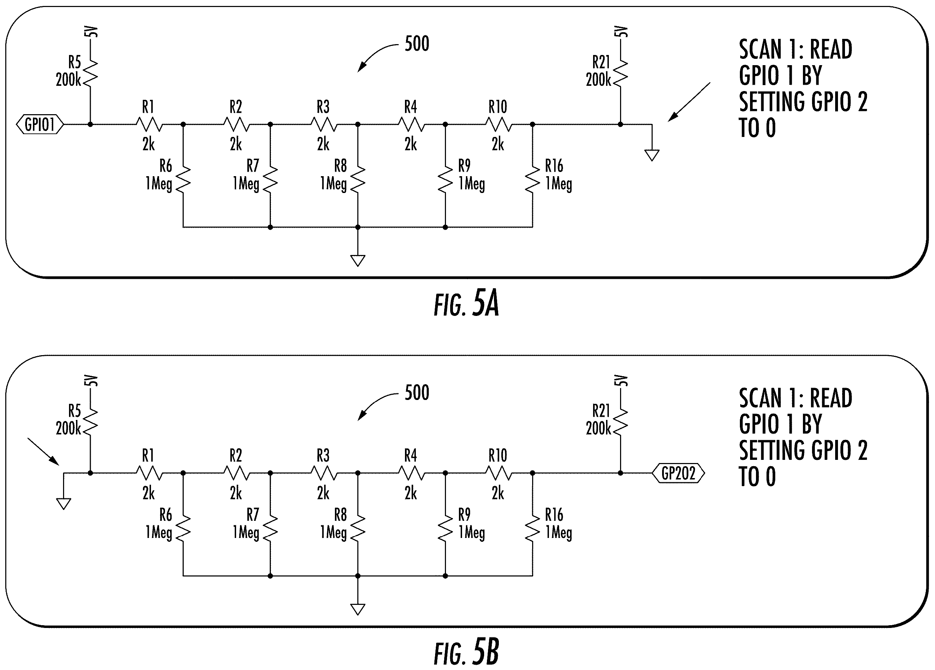

When more than one of the plurality of temperature sensing elements 204a, 204b, 204c detects the triggering event, a dual scan--one from each end of the conductive circuit--can identify two of the plurality of temperature sensing elements 204a, 204b, 204c that detected the triggering event and thus, boundaries of a region of heating. In this regard, FIG. 5A is a circuit diagram illustrating a conductive circuit 500 of a temperature sensing tape during a first scan in the dual scan, and FIG. 5B is a circuit diagram illustrating the conductive circuit 500 during a second scan in the dual scan. During the first scan, a first output voltage at a first end of the conductive circuit 500 can identify a first of the plurality of temperature sensing elements 204a, 204b, 204c detecting the triggering event, and during the second scan, a second output voltage at a second end of the conductive circuit 500 can identify a second of the plurality of temperature sensing elements 204a, 204b, 204c detecting the triggering event.

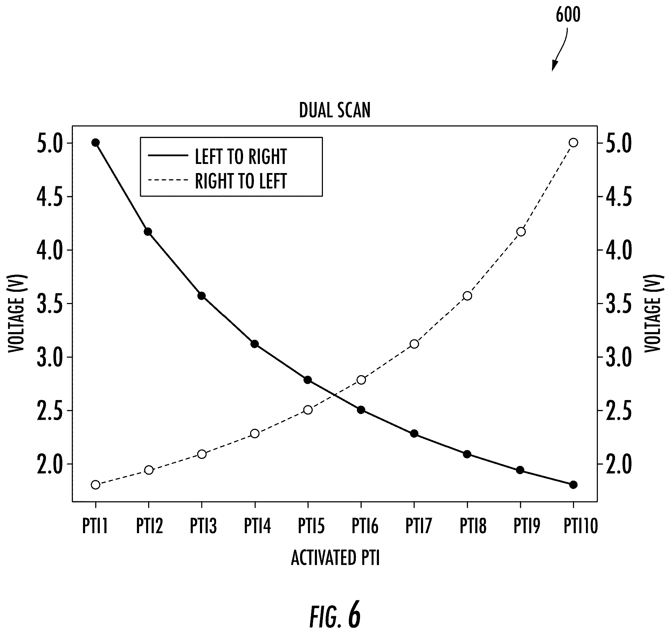

In accordance with the above, FIG. 6 is a graph 600 illustrating output voltage vs. activated temperature sensing element in a dual scan of a temperature sensing tape in accordance with the present disclosure.

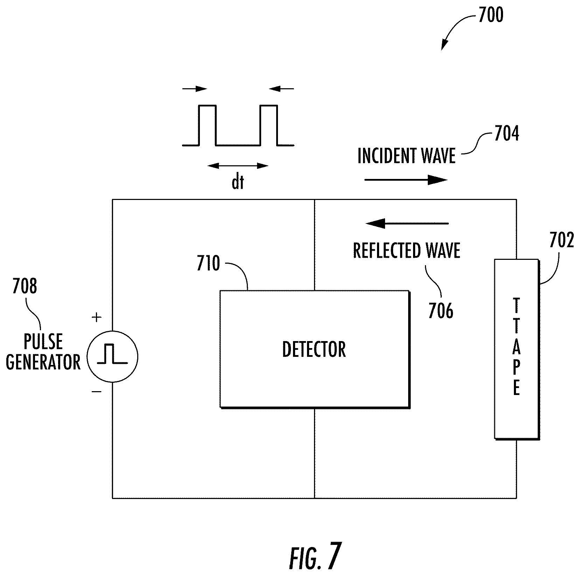

In accordance with the pulses injected into and reflected by the temperature sensing tape and TDR example disclosed herein, FIG. 7 is a block diagram illustrating a thermal protection system 700 in accordance with the present disclosure. As in the resistive ladder disclosed above, a temperature sensing tape 702 can include an insulating support structure, a plurality of temperature sensing elements electrically connected in series and disposed on the insulating support structure, and a flexible conductor disposed on the insulating support structure and arranged in series with the plurality of temperature sensing elements to form a conductive circuit. However, parallel resistors in the conductive circuit are not needed.

Instead, an incident pulse signal 704 can be injected into the conductive circuit, for example, by a pulse generator 708. When a triggering event is detected by one of the plurality of temperature sensing elements, an impedance of the one of the plurality of temperature sensing elements that detected the triggering event can change and, instead of passing the incident pulse signal 704 therethrough, the one of the plurality of temperature sensing elements that detected the triggering event can reflect the incident pulse signal 704 as a reflected pulse signal 706 due to an impedance mismatch in the conductive circuit. In particular, when detecting the triggering event, an impedance of the one of the plurality of temperature sensing elements can change, thereby creating an open circuit in the plurality of temperature sensing elements downstream of the one of the plurality of temperature sensing elements.

In accordance with the above, timing and velocity related to the incident pulse signal 704 and/or the reflected pulse signal 706 can be measured in the thermal protection system 700, for example, by a detecting device 710. In particular, the detecting device 710 can measure, calculate, and/or determine a time difference between the incident pulse signal 704 and the reflected pulse signal 706, and this timing difference can indicate which of the plurality of temperature sensing elements detected the triggering event. In particular, different time differences can correspond to different ones of the plurality of temperature sensing elements being activated by detection of the triggering event. For example, the time difference can be identified in a lookup table for the temperature sensing tape 702 to identify which of the plurality of temperature sensing elements detected the triggering event. Additionally or alternatively, the detecting device 710 can measure, calculate, and/or determine a velocity of propagation of the incident pulse signal 704 and/or the reflected pulse signal 706 as well as a time difference between the incident pulse signal 704 and the reflected pulse signal 706, and a distance to the one of the plurality of temperature sensing elements can be identified by multiplying the velocity of propagation of the incident pulse signal 704 and the time difference and dividing that product by 2.

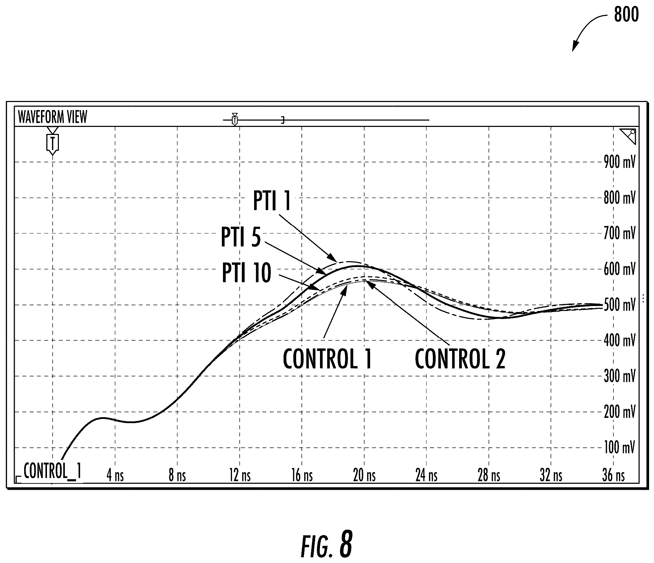

In accordance with the above, FIG. 8 is a graph 800 illustrating an incident pulse signal and reflected pulse signals from activated temperature sensing elements in a temperature sensing tape in accordance with the present disclosure. Optimized waveguide properties and/or narrower pulses can improve resolution.

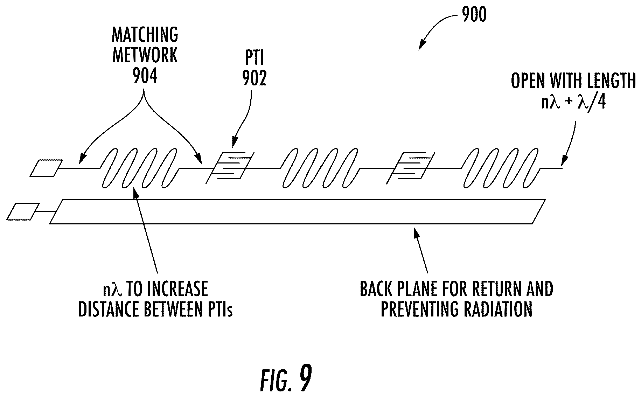

FIG. 9 is a diagram illustrating another temperature sensing tape 900 in accordance with the present disclosure. When none of a plurality of temperature sensing elements 902 is activated by detecting a triggering event, a conductive circuit of the temperature sensing tape 900 can have a uniform impedance so that a reflected pulse signal is only produced when one of the plurality of temperature sensing elements 902 detects the triggering event. For example, an impedance of a flexible conductor 904 in the temperature sensing tape 900 can be matched to an impedance of the plurality of temperature sensing elements 902, which can be matched to an impedance of a pulse generator from which an incident pulse signal originates. In particular and as seen in FIG. 9, the flexible conductor 904 disposed between two of the plurality of temperature sensing elements 902 can be wave-shaped to increase a length of the flexible conductor temperature sensing element 902 and an electrical distance that the incident pulse signal and the reflected pulse signal travel without increasing a physical distance between the two of the plurality of temperature sensing elements 902.

In addition to changing the impedance of the flexible conductor 904, increasing an inductance and/or a capacitance of various elements in the temperature sensing tape, including the flexible conductor 904 and/or the plurality of temperature sensing elements 902, can slow down the incident pulse signal and the reflected pulse signal.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

While the present disclosure makes reference to certain examples , numerous modifications, alterations, and changes to the described embodiments are possible without departing from the scope of the present disclosure, as defined in the appended claims. Accordingly, it is intended that the present disclosure not be limited to the described embodiments, but that it has the full scope defined by the language of the following claims and equivalents thereof.

## Claims

1. A temperature sensing tape comprising:
an insulating support structure;
a plurality of temperature sensing elements electrically connected in series and disposed on the insulating support structure;
wherein a triggering event detected by one of the plurality of temperature sensing elements causes a change in impedance of the one of the plurality of temperature sensing elements.

2. The temperature sensing tape of claim 1, further comprising a respective resistor connected in parallel between each of the plurality of temperature sensing elements and disposed on the insulating support structure.

3. The temperature sensing tape of claim 1 or 2, wherein the triggering event further causes an open circuit in the plurality of temperature sensing elements downstream of the one of the plurality of temperature sensing elements.

4. The temperature sensing tape of any of the preceding claims, further comprising:
a conductive circuit that includes the plurality of temperature sensing elements, the respective resistor connected in parallel between each of the plurality of temperature sensing elements, and a flexible conductor disposed on the insulating support structure therebetween,
wherein an output voltage of the conductive circuit indicates which of the plurality of temperature sensing elements detected the triggering event.

5. The temperature sensing tape of any of the preceding claims, further comprising:
a pull up resistor at one end of the conductive circuit,
wherein the output voltage is measured at the pull up resistor,
and/or further comprising:
an amplifier circuit electrically connected to the conductive circuit.

6. The temperature sensing tape of any of the claims 1-3, further comprising:
a conductive circuit that includes the plurality of temperature sensing elements, the respective resistor connected in parallel between each of the plurality of temperature sensing elements, and a flexible conductor disposed on the insulating support structure therebetween,
wherein a first output voltage at a first end of the conductive circuit identifies a first of the plurality of temperature sensing elements detecting the triggering event, and
wherein a second output voltage at a second end of the conductive circuit identifies a second of the plurality of temperature sensing elements detecting the triggering event.

7. The temperature sensing tape of any of the preceding claims, wherein the plurality of temperature sensing elements includes a polymeric positive temperature coefficient (PPTC) sensor or a printed temperature indicator (PTI) sensor, and wherein the respective resistor connected in parallel between each of the plurality of temperature sensing elements includes a low-temperature coefficient material with high resistance.

8. The temperature sensing tape of claim 1, further comprising:
a flexible conductor disposed on the insulating support structure and arranged in series with the plurality of temperature sensing elements to form a conductive circuit,
wherein the triggering event further causes an incident pulse signal injected into the conductive circuit to be reflected by the one of the plurality of temperature sensing elements as a reflected pulse signal, preferably wherein a time difference between the incident pulse signal and the reflected pulse signal indicates which of the plurality of temperature sensing elements detected the triggering event.

9. The temperature sensing tape of any of the claims 6-8, wherein the conductive circuit has a uniform impedance absent the triggering event.

10. The temperature sensing tape of any of the claims 6-9, wherein the flexible conductor disposed between two of the plurality of temperature sensing elements is wave-shaped to increase a length of the flexible conductor and an electrical distance that the incident pulse signal and the reflected pulse signal travel without increasing a physical distance between the two of the plurality of temperature sensing elements.

11. The temperature sensing tape of any of the claims 6-10, wherein increasing inductance and capacitance of the temperature sensing tape slows down the incident pulse signal and the reflected pulse signal.

12. A method comprising:
detecting a triggering event by one of a plurality of temperature sensing elements of a conductive circuit electrically connected in series with a flexible conductor and disposed on an insulating support structure of a temperature sensing tape;
changing an impedance of the one of the plurality of temperature sensing elements responsive to detecting the triggering event to create an open circuit in the plurality of temperature sensing elements downstream of the one of the plurality of temperature sensing elements; and
outputting an output signal from the conductive circuit,
wherein the output signal is indicative of which of the plurality of temperature sensing elements detected the triggering event.

13. The method of claim 12, wherein a respective resistor is connected in parallel between each of the plurality of temperature sensing elements, and wherein the output signal includes an output voltage, preferably further comprising:
measuring the output voltage at a pull up resistor located at one end of the conductive circuit; and
identifying which of the plurality of temperature sensing elements corresponds with the output voltage in a lookup table for the temperature sensing tape, and/or
amplifying the output voltage with an amplifier circuit electrically connected to the conductive circuit.

14. The method of claim 13, further comprising:
measuring the output voltage at a first end of the conductive circuit to identify a first of the plurality of temperature sensing elements detecting the triggering event; and
measuring the output voltage at a second end of the conductive circuit to identify a second of the plurality of temperature sensing elements detecting the triggering event.

15. The method of any of the claims 12-14, wherein the output signal includes a reflected pulse signal that is a reflection of an incident pulse signal injected into the conductive circuit and reflected by the one of the plurality of temperature sensing elements, preferably further comprising:
measuring a time difference between the incident pulse signal and the reflected pulse signal; and
identifying which of the plurality of temperature sensing elements corresponds with the time difference for the temperature sensing tape,
and/or further comprising:
matching an impedance of the flexible conductor with the impedance of the plurality of temperature sensing elements absent the triggering event to create a uniform impedance in the conductive circuit,
preferably wherein the flexible conductor disposed between two of the plurality of temperature sensing elements is wave-shaped to increase a length of the flexible conductor and an electrical distance that the incident pulse signal and the reflected pulse signal travel without increasing a physical distance between the two of the plurality of temperature sensing elements.
